# FASCICULE DE BREVET EUROPEEN

(11) **EP 1 332 120 B1**
(45) Date de publication et mention de la délivrance du brevet: **09.08.2006**
(21) Numéro de dépôt: 01983644.4
(22) Date de dépôt: 29.10.2001
(51) Int. Cl.: C04B 35/83, C04B 41/45

(54) **PERFECTIONNEMENT AUX PROCEDES DE DENSIFICATION PAR CALEFACTION D'UNE STRUCTURE POREUSE**
PERFEKTIONIERUNG VON VERFAHREN ZUR VERDICHTUNG EINER PORÖSEN STRUKTUR UNTER ERHITZUNG
IMPROVEMENTS TO METHODS FOR CALEFACTION DENSIFICATION OF A POROUS STRUCTURE

(30) Priorité: 30.10.2000 FR 0013921
(43) Date de publication de la demande: 06.08.2003
(73) Titulaire: COMMISSARIAT A L'ENERGIE ATOMIQUE, 75752 Paris 15ème (FR)
(72) Inventeur: DAVID, Patrick, F-37540 SAINT CYR SUR LOIRE (FR); ROVILLAIN, Dominique, F-78150 LE CHESNAY (FR); MALON, Frédéric, F-37260 PONT DE RUAN (FR); DELHAES, Pierre, F-33170 GRADIGNAN (FR); DERRE, Alain, F-33800 BORDEAUX (FR); TRINQUECOSTE, Michel, F-33160 ST MEDARD EN JALLES (FR)
(74) Mandataire: Poulin, Gérard
(86) Numéro de dépôt international: PCT/FR2001/003355
(87) Numéro de publication internationale: WO 2002/036520

(56) Documents cités:
- WO-A-99/40042
- FR-A- 2 760 741
- FR-A- 2 760 742

## Description

### Domaine technique

La présente invention a pour objet un procédé de densification d'une structure poreuse, et elle concerne, plus précisément, une amélioration de ce procédé, qui permet de diminuer la puissance électrique consommée et d'augmenter la vitesse de densification, ainsi que d'améliorer l'homogénéité de la texture du produit déposé.

On rappelle que le procédé de densification par caléfaction (procédé mixte gaz-liquide) d'une structure poreuse consiste à combler les vides de la structure poreuse en déposant dans ceux-ci un matériau identique ou différent de celui constituant la structure, par décomposition thermique d'un précurseur liquide.

L'invention s'applique, à la densification de matériaux poreux, en particulier de feutres, tissus, préformes aiguilletées et tridirectionnelles, pouvant être avantageusement utilisés, du fait de leur résistance mécanique élevée, de leur pouvoir isolant thermique excellent et de leur bonne résistance aux chocs et à l'abrasion, pour la réalisation de boucliers thermiques, de disques de frein et de cols de tuyère.

### Etat de la technique antérieure

La technique de base des procédés de densification par caléfaction ou densification rapide est décrite notamment dans le document FR-A-2 516 914 [1]. Cette technique consiste à immerger la structure poreuse à densifier dans un précurseur liquide, constitué par un hydrocarbure, et à chauffer l'ensemble par induction; de façon à former, par décomposition de l'hydrocarbure, du carbone ou du graphite pyrolytique pouvant se déposer à l'intérieur des pores de la structure.

On a utilisé également cette technique, comme il est décrit dans FR-A-2 712 884 [2], pour densifier une structure poreuse avec un matériau céramique tel que du nitrure de bore, en utilisant comme précurseur un précurseur liquide choisi parmi les, borazines, par exemple la trichloroborazine

On peut aussi, par cette technique, déposer dans les pores de la structure poreuse deux matériaux différents, en réalisant à l'intérieur de la structure un gradient de composition des deux matériaux, comme il est décrit dans EP-A-0 515 186 [3].

Des perfectionnements au dispositif utilisé pour cette technique de densification par caléfaction ont été aussi décrits dans US-A-5 389 152 [4] et dans US-A-5 547 717 [5].

Dans les documents FR-A-2 760 741 [6] et FR-A-2 760 742 [7], il a été proposé d'utiliser d'autres précurseurs liquides que le cyclohexane ; ces précurseurs sont des composés aromatiques constitués par des dérivés halogénés ou alkylés du benzène et du naphtalène. Il a également été proposé, dans ces documents, de maintenir au contact de la structure poreuse à densifier, une autre structure poreuse d'une épaisseur au moins égale à 3 mm, telle qu'un feutre de 3 à 5 mm d'épaisseur, pour assurer la densification de la structure poreuse sur toute son épaisseur.

De façon similaire, il a été proposé dans WO-A-99/40042 d'améliorer la densification d'une préforme carbonée poreuse au niveau de ses bords en recouvrant ces derniers d'un matériau isolant thermique, comme un feutre de carbone, propre à maintenir une température plus élevée sur le pourtour de la préforme.

Dans les procédés décrits dans les documents précités, les flux de matière sont régis par le phénomène de caléfaction et se font de manière naturelle, ce qui conduit :
- à un mauvais rendement énergétique, puisque 50 à 90 % de l'énergie de chauffage passe dans l'évaporation, sans servir au craquage ; et
- à des vitesses non optimisées de densification, puisque les gradients thermiques sont très élevés et que la vitesse de densification diminue, lorsque le gradient thermique augmente.

### Exposé de l'invention

La présente invention a précisément pour objet une amélioration des procédés de densification par caléfaction pour structure poreuse, qui permet de diminuer la puissance électrique consommée et d'augmenter la vitesse de densification, ainsi que d'améliorer l'homogénéité de la texture du produit déposé dans le cas où celui-ci est du carbone.

Selon l'invention, le procédé de densification par caléfaction d'une structure poreuse consiste à immerger la structure poreuse, accolée ou non à un suscepteur, dans un précurseur liquide et à chauffer l'ensemble pour déposer le produit de décomposition dudit précurseur liquide dans les pores de la structure poreuse, et il se caractérise en ce que l'on réduit le débit de précurseur liquide entrant dans la structure poreuse, de façon à réduire le phénomène de vaporisation du précurseur liquide autour de la structure poreuse à densifier. Le chauffage peut être de type résistif ou inductif (avec suscepteur ou sans, par couplage direct sur la préforme).

L'invention consiste donc à contrôler l'arrivée du précurseur liquide dans la pièce poreuse à densifier. Ceci peut être obtenu en disposant autour d'au moins une partie de la structure poreuse un filtre en matériau différent de celui formant la structure, présentant une perméabilité inférieure à celle de la structure à densifier. On peut utiliser par exemple un filtre présentant une perméabilité de 0,05 à 20 D et une épaisseur de 50 µm à 2 mm.

Grâce à la présence de ce filtre autour de la structur poreuse, on obtient pour une température maximale identique dans la pièce, une diminution de la puissance électrique et une augmentation de la vitesse de densification.

La diminution de la puissance électrique est principalement due au fait que la vaporisation du précurseur, qui est un phénomène très endothermique, absorbant, de l'énergie et refroidissant l'extérieur de la structure poreuse, est fortement réduite, en terme de débit.

L'augmentation de la vitesse de densification est une conséquence du phénomène précédent. Elle provient du fait que les gradients thermiques sont plus faibles dans la pièce car la quantité de chaleur évacuée est moindre, et que les vitesses de dépôt croissent de manière exponentielle avec la température, ce qui donne une vitesse de densification globale plus élevée.

Enfin, dans le cas où le procédé de l'invention est utilisé pour densifier une structure poreuse par dépôt de carbone, le filtre améliore aussi, pour la gamme de températures la moins élevée, l'homogénéité du carbone déposé. Il permet d'éliminer la formation de carbone de type mosaïque ou ex-brai, à l'intérieur des torons ou mèches de fibres de la structure poreuse, en atténuant ou en calmant les perturbations dues à l'ébullition du précurseur, soit la pénétration par à-coups du liquide dans la structure poreuse.

Ainsi, selon l'invention, on obtient ces résultats en réduisant le flux de précurseur liquide entrant dans la structure poreuse, ce qui est l'opposé du but poursuivi dans le document [4] où, au contraire, on cherche à augmenter le flux de précurseur dans la structure par création d'ondes de liquide au lieu de le limiter.

De même, l'effet obtenu grâce à la présence d'un filtre est tout à fait différent de celui que l'on obtient avec le feutre utilisé dans les documents [6] et [7].

Dans ces documents, le feutre agit comme prolongement de la structure poreuse et se trouve partiellement densifié à l'issue du procédé. Ainsi, on est assuré de densifier la structure poreuse sur toute son épaisseur.

Dans l'invention, le filtre n'agit pas comme prolongement de la structure poreuse, mais comme limiteur du débit d'entrée de liquide précurseur dans la structure poreuse.

Le filtre utilisé dans l'invention peut être réalisé en divers matériaux, à condition que le matériau utilisé soit inerte vis-à-vis du précurseur liquide utilisé et qu'il résiste à la température d'ébullition de ce précurseur liquide.

Ce filtre peut être réalisé en fibres minérales, en fibres organiques ou en fibres de verre, (par exemple sous forme d'une ou plusieurs couches de tissus).

Le matériau utilisé pour le filtre est aussi choisi en fonction de la nature du précurseur liquide utilisé pour qu'il présente une mouillabilité appropriée par le précurseur liquide.

Selon l'invention, on utilise avantageusement un filtre constitué par un tissu de polytétrafluoroéthylène.

L'épaisseur du filtre est également choisie en fonction de la nature du précurseur liquide, utilisé pour obtenir la réduction du débit de précurseur appropriée. Le choix de l'épaisseur permet aussi de moduler la puissance et la vitesse de dépôt dans la structure poreuse. Cependant, au-delà d'une certaine épaisseur du filtre, la densification conduit à une porosité croissante, ce qui nuit, en général, pour les applications les plus courantes, à la qualité du matériau densifié.

Selon l'invention, on pourrait aussi obtenir le même effet de réduction du débit de précurseur liquide introduit dans la pièce, en disposant, autour de celle-ci, au sein du réacteur, une barrière de diffusion constituée de garnitures (billes de verre, anneaux Raschig).

Le procédé de l'invention peut être mis en oeuvre pour déposer divers produits, en particulier du carbone ou des composés céramiques ou des mélanges de ceux-ci.

Dans le cas où l'on densifie la structure poreuse par dépôt de carbone, le précurseur liquide peut être un hydrocarbure liquide choisi parmi les alcanes, les cycloalcanes, les alcènes, les hydrocarbures aromatiques et leurs dérivés.

Le cycloalcane peut être en particulier le cyclohexane.

Les hydrocarbures aromatiques peuvent être choisis parmi le benzène, le naphtalène et leurs dérivés halogénés ou alkylés.

Dans le cas du dépôt d'un composé céramique, le précurseur liquide peut être choisi parmi les borazines, les alcoolates, les silanes et leurs dérivés.

Selon l'invention, on peut aussi intercaler, entre la structure poreuse à densifier et le filtre, une autre structuré poreuse d'une épaisseur au moins égale à 3 mm, telle qu'un feutre ayant une épaisseur de 3 à 10 mm.

Pour mettre en oeuvre le procédé de l'invention, on peut réaliser le chauffage de l'ensemble par induction, par effet Joule, ou par couplage direct, ou par une combinaison de ces moyens.

Lorsque le chauffage est un chauffage inductif mis en oeuvre avec un suscepteur ou un chauffage résistif mis en oeuvre avec un résistor, un joint de dilatation est de préférence disposé entre la structure poreuse à densifier et le suscepteur ou le résistor.

Un tel joint présente généralement une épaisseur d'au moins 1 mm, avantageusement d'au moins 3 mm. Il peut consister en du papier graphite.

Les structures poreuses, susceptibles d'être densifiées par le procédé selon l'invention, peuvent être en particulier des tissus ou feutres de carbone ou de graphite.

Généralement, on réalise la densification de telles structures poreuses par dépôt de carbone, à partir des précurseurs liquides mentionnés ci-dessus.

D'autres caractéristiques et avantages de l'invention apparaîtront mieux à la lecture de la description qui suit, d'exemples de réalisation donnés, bien entendu, à titre illustratif et. non limitatif, en référence aux dessins annexés.

### Brève description des dessins

- La figure 1 est une représentation schématique d'un dispositif de densification utilisable dans l'invention ;
- la figure 2 représente, en coupe horizontale, la structure poreuse à densifier de la figure 1 ;
- la figure 3 illustre les profils de températures dans des structures poreuses en forme de disques, soumises à la densification, en présence d'un filtre ;
- la figure 4 illustre les profils de températures dans des structures poreuses, identiques à celles utilisées pour la figure 3, mais densifiées sans la présence du filtre.

### Exposé détaillé des modes de-réalisation

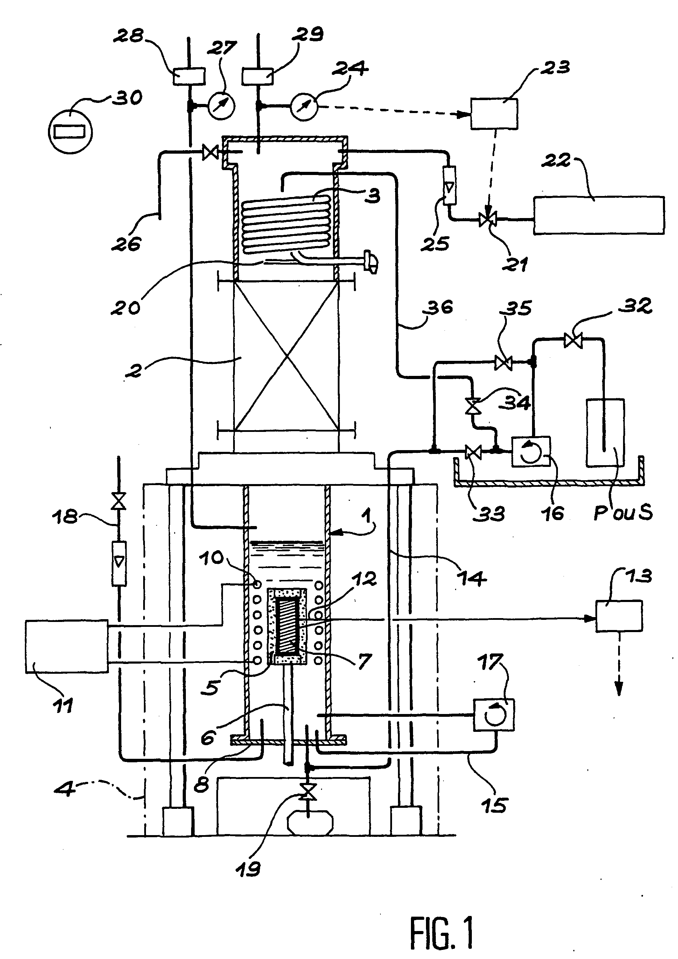

Sur la figure 1, on a représenté un dispositif de densification utilisant un chauffage par induction avec suscepteur, utilisable pour la mise en oeuvre du procédé de l'invention.

Ce dispositif comprend une colonne constituée de trois parties, à savoir un réacteur 1, un dévésiculeur 2 ou piège à aérosols et un condenseur ou échangeur de chaleur 3. La partie réacteur est munie d'une enceinte de confinement ou boîte à gants 4 balayée intérieurement par un courant de gaz neutre. Celle-ci assure la sécurité du manipulateur en cas de rupture du réacteur et permet d'éviter l'inflammation ou l'explosion des gaz de réaction ainsi que l'inhalation du produit par le manipulateur.

L'ensemble comportant la structure poreuse à densifier 5 et le suscepteur 7 est placé sur un support 6 rotatif ou non. Le support 6 est monté dans la partie inférieure du réacteur 1 et traverse la tape de fermeture 8 à travers laquelle il peut coulisser.

Les bobines d'induction 10, qui peuvent se situer à l'intérieur du réacteur, sont alimentées en courant haute fréquence par un générateur 11. Les températures de la structure poreuse et du suscepteur sont mesurées par des thermocouples ou thermosondes 12, reliés à un programmateur 13, permettant de réguler la puissance du générateur 11, afin de contrôler la température de dépôt.

En outre, le réacteur comprend un conduit 14 permettant l'introduction du précurseur en continu à l'intérieur du réacteur 1 et un conduit 15 permettant de filtrer en continu le contenu du réacteur, afin d'éliminer les goudrons et suspensions générés dans celui-ci ; ces deux conduits sont équipés chacun d'une pompe à circulation 16 et 17. Le réacteur est aussi muni d'un conduit d'azote 18 ou autre gaz neutre servant à chasser l'air contenu dans le réacteur 1 en début de procédé et, enfin, d'un orifice muni d'une vanne 19 situé dans la partie inférieure du réacteur et permettant la vidange de celui-ci.

Le dévésiculeur 2, situé au-dessus du réacteur 1, a pour rôle d'éliminer le brouillard créé au niveau du réacteur 1. Le condenseur ou échangeur de chaleur 3, situé au-dessus du dévésiculeur 2, comprend un serpentin 20 de circulation du liquide de refroidissement (généralement de l'eau).

L'échangeur de chaleur permet, par refroidissement des vapeurs du précurseur et par condensation de celles-ci, de les renvoyer dans le réacteur 1.

Les gaz de réaction sont extraits sous dépression, par l'intermédiaire d'une vanne de régulation de pression 21, et menés au travers d'un conduit jusqu'à une installation de traitement des gaz 22 (neutralisation en cas d'emploi de composés halogénés). La vanne de régulation de pression 21 est pilotée par un régulateur 23 relié à un pressostat 24. Le débit des gaz de craquage est mesuré par un débitmètre 25. La ligne 26 permet d'effectuer des analyses de gaz.

L'installation comporte aussi un deuxième pressostat 27, afin de connaître la pression dans le réacteur, ainsi que deux conduits munis de soupapes de sécurité 28 et 29, afin d'éviter une surpression dans la colonne (tarage à 0,2 MPa). Un explosimètre 30 est également placé à proximité de l'installation pour détecter toute fuite de gaz de craquage à l'extérieur de celle-ci.

Les vannes 32, 33, 34 et 35 permettent l'emploi de la pompe 16, soit pour envoyer du précurseur P durant la mise en oeuvre du procédé, soit pour faire circuler du solvant S, en circuit fermé, à travers les conduits 14 et 36 pour nettoyer l'installation, en fin d'expérimentation.

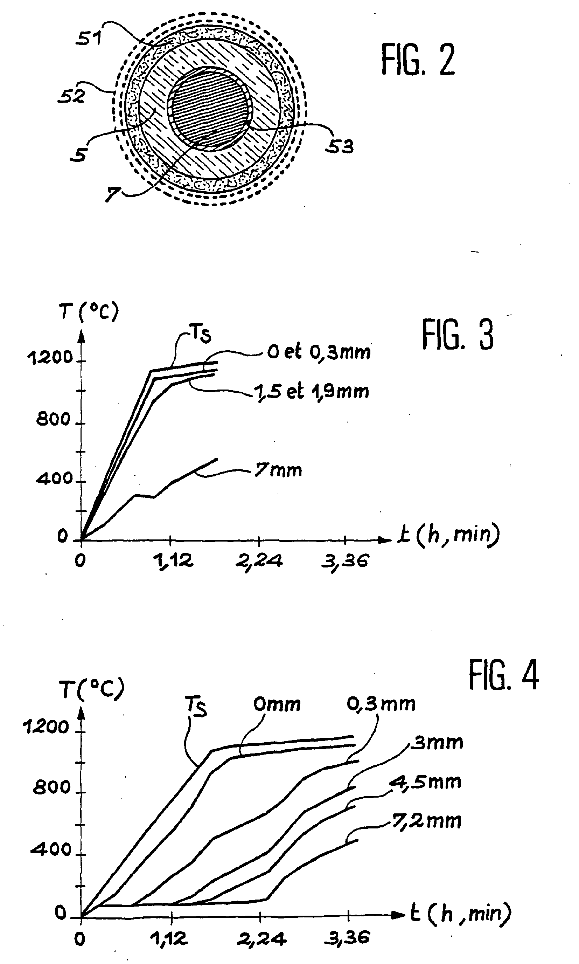

Sur la figure 2, on a représenté une coupe horizontale de l'ensemble formé par la structure poreuse 5 et le suscepteur entouré de papyex (papier graphite) 53 de la figure 1.

Sur cette figure, on voit que la structure poreuse 5 est disposée autour du suscepteur 7 et qu'elle est entourée d'un feutre 51 et du filtre 52, conformément à l'invention.

On notera que sur cette figure, l'épaisseur du filtre a été exagérée par rapport à celle du feutre, alors que le filtre a une épaisseur nettement plus faible.

On décrit, ci-après, un mode de mise en oeuvre du procédé de l'invention dans ce dispositif.

On dispose l'ensemble constitué du suscepteur 7, de la structure poreuse 5, du feutre 51 et du filtre 52 sur le support 6, à l'intérieur du réacteur 1. On place les thermosondes 12, puis l'on effectue un balayage du réacteur 1 et de l'enceinte de confinement 4, à l'aide d'un gaz inerte, afin de chasser l'oxygène éventuellement présent. On remplit alors le réacteur avec un précurseur, le cyclohexane, par exemple.

Après avoir mis en fonctionnement le circuit réfrigérant 20 et l'installation de traitement des gaz 22, et mis sous tension la pompe de filtration 17, le générateur 11, le programmateur de température 13 et le régulateur de pression 23, on démarre la montée en température de l'ensemble. La pression est fixée à 0,12 MPa par l'intermédiaire du régulateur de pression 23.

Dès que le précurseur entre en ébullition, on supprime le balayage de gaz inerte du réacteur. Lorsqu'on atteint la température de craquage (environ 800°C pour le cyclohexane), les vapeurs du précurseur se décomposent dans la structure poreuse, ce qui conduit au dépôt de carbone à l'intérieur des pores du substrat.

Plus précisément, le craquage se réalise au niveau des parois les plus chaudes de la structure poreuse. Lorsque la structure poreuse est montée sur un suscepteur, le front de densification se propage de la face de la structure poreuse en contact avec le suscepteur vers la paroi extérieure. Lorsqu'il n'y a pas de suscepteur, le front de densification progresse depuis l'intérieur de la structure poreuse vers ses parois extérieures placées au contact du précurseur liquide.

La vitesse d'avancée du front de densification peut varier de quelques dixièmes de mm/h au cm/h, en fonction de la température maximale de la structure poreuse et de sa nature (type de porosité). La température est contrôlée par le programmateur 13 relié au thermocouple 12 placé dans le suscepteur 7 (ou au centre de la structure poreuse 10, lorsqu'il n'y en a pas). La mesure, par le débitmètre 25, des débits de gaz de réaction, et la connaissance de leur composition, permet de calculer la vitesse d'avancée du front de densification.

L'ajout en continu de précurseur est effectué afin de conserver une quantité constante de précurseur dans le réacteur.

Le mélange gaz de réaction, vapeur non craquée et aérosols produits dans le réacteur est évacué en partie haute de celui-ci. Les aérosols et les vapeurs sont condensés au niveau du dévésiculeur 2 et de l'échangeur 3, les gaz de réaction sont extraits en partie haute de l'installation et éventuellement neutralisés dans l'installation de traitement des gaz 22. Lorsque l'on arrive en fin de densification, le débit de gaz mesuré chute de manière importante. On diminue alors progressivement la température jusqu'à la température ambiante.

L'ensemble ainsi obtenu est alors récupéré et subit un traitement thermique à 500°C environ à l'étuve sous vide, afin de retirer le précurseur résiduel imprégnant les porosités restantes. Le suscepteur et le filtre sont séparés de l'ensemble et la partie extérieure de la structure non densifiée (feutre ajouté, s'il y en avait un) est usinée.

Dans le cas de dépôt de carbone, les structures densifiées obtenues sont homogènes, de densité supérieure ou égale à 1,7 et possèdent, comme le montre la caractérisation par microscopie optique en lumière polarisée, une structure laminaire rugueuse. Cette structure est la plus intéressante car elle permet d'obtenir, par traitement thermique à haute température (2 400°C), une structure cristalline proche de celle du graphite.

On décrit, ci-après, deux exemples de densification de pièces en carbone, en utilisant comme précurseur liquide le cyclohexane et en donnant les résultats lorsque la densification a lieu en présence, ou non, d'un filtre.

### Exemple 1

Le réacteur employé a un diamètre intérieur de 200 mm, une hauteur de 300 mm. L'inducteur, qui se trouve dans le réacteur, possède une hauteur de 150 mm et est constitué de six spires de diamètres intérieur et extérieur ayant respectivement pour valeurs 175 mm et 195 mm.

Le suscepteur employé a un diamètre de 80 mm et une hauteur de 100 mm. Il est entièrement recouvert à l'aide de trois pièces en feutre de carbone (densité 0,40 à 0,45) à densifier :
- un cylindre creux ayant des diamètres intérieur et extérieur respectivement de 80 et 120 mm et une hauteur de 100 mm, recouvrant sa surface latérale ;
- deux disques ayant un diamètre de 120 mm et une épaisseur de 20 mm, recouvrant en partie haute et basse ses deux surfaces planes.

Le tout est recouvert d'un filtre formé de deux couches de tissu en polytétrafluoroéthylène GORE TEX® , présentant les caractéristiques suivantes :
- épaisseur d'une couche : 0,2 mm ;
- filtration : ne laisse passer que les particules de diamètre inférieur à 7,5 µm ;
- perméabilité : 1 Darcy (ou 1 µm²);
- conductivité thermique : 0,045 W/m.K à 50°C ; 0,054 W/m.K à 100°C.

L'épaisseur totale du filtre est de 0,4 mm.

La pression est fixée à 0,1 MPa. La montée en température s'effectue à une vitesse de 500°C/h jusqu'à 1 100°C. On ajuste la puissance au cours du temps, de manière à conserver le débit de gaz de craquage à peu près constant. Après environ 7 h de densification, on procède à la descente en température à une vitesse de 800°C/h.

Les résultats sont les suivants :
- la vitesse de densification est de 3 mm/h ;
- la consommation énergétique est de 65 kWh/kg de carbone déposé ;
- le carbone est déposé de manière homogène et possède une structure de type laminaire rugueux.

Par comparaison, sans filtre en GORE TEX® dans les mêmes conditions, la densification dure environ 10 h :
- la vitesse de densification est de 1,9 mm/h ;
- la consommation énergétique est de 120 kWh/kg ;
- le dépôt n'est pas homogène, puisque dans les torons de fibres, en partie externe, il y a des dépôts de carbone de type mosaïque ou carbone ex-brai.

### Exemple 2

Cet exemple concerne la densification de petites pièces en carbone. Le chauffage est réalisé de manière résistive.

L'élément chauffant est une tige de graphite de 3 mm de diamètre. Il est entouré par l'échantillon à densifier qui est un tube de feutre de carbone (densité 0,1) de 2 cm de diamètre et de 3 cm de hauteur. Le tout est enveloppé dans un filtre formé de deux couches de tissu GORE TEX® , comme dans l'exemple 1.

La pression est fixée à 0,1 MPa. La montée en température s'effectue à une vitesse de 1 000°C/h jusqu'à 1 100°C. La température est maintenue à 1 100°C pendant 30 min., puis l'on procède à la descente en température à une vitesse de 1 000°C/h.

Les résultats sont les suivants :
- la vitesse de densification est de 4 mm/h ;
- l'énergie consommée est de 110 kWh/kg de carbone déposé ;
- la densité est de 1,8.

Par comparaison, s'il n'y a pas de filtre en GORE TEX® , dans les mêmes conditions :
- la vitesse est de 0,6 mm/h ;
- l'énergie consommée est de 1 400 kWh/kg de carbone déposé ;
- la densité est de 1,8.

Les figures 3 et 4 illustrent les profils de températures dans les disques de carbone de 20 mm d'épaisseur densifiés dans l'exemple 1.

Sur la figure 3, la courbe Ts illustre la variation de température (en °C) du suscepteur en fonction du.temps (en heure et en minute). Les courbes suivantes indiquent l'évolution de la température (en °C) en fonction du temps (en heure et en minute) pour les régions du disque situées aux distances indiquées (en mm). Chaque distance correspond à la distance entre l'endroit de la pièce où est mesurée la température, et le suscepteur.

Sur la figure 4, on a représenté les profils de températures obtenus dans les mêmes conditions sur des disques de 20 mm d'épaisseur, en l'absence de filtre en GORE TEX® .

En comparant ces deux figures, on remarque que la montée plus rapide sur la figure 3 montre que les gradients thermiques sont plus faibles. Comme les vitesses de dépôt sur les fibres et les rendements en carbone croissent avec la température, des valeurs de température plus élevées dans la pièce, c'est-à-dire un gradient plus faible dans le cas où l'on utilise un filtre en GORE TEX® , conduisent à une densification plus rapide, une consommation d'énergie moindre et un rendement en carbone plus élevé.

On constate ainsi que l'emploi d'un filtre, conformément à l'invention, contrôle l'interface liquide/gaz et modifie de manière simple les flux de vapeur à l'intérieur des pièces, ce qui permet des gains importants sur la vitesse de densification et l'énergie électrique nécessaire à la densification, facteurs économiques importants pour la fabrication des pièces.

## Revendications

1. Procédé de densification par caléfaction d'une structure poreuse consistant à immerger la structure poreuse dans un précurseur liquide et à chauffer l'ensemble pour déposer le produit de décomposition dudit précurseur liquide dans les pores de la structure poreuse, **caractérisé en ce que** l'on réduit le débit de précurseur liquide entrant dans la structure poreuse de façon à réduire le phénomène de vaporisation du précurseur liquide autour de la structure poreuse à densifier, en disposant, autour d'au moins une partie de la structure poreuse, un filtre en matériau différent du matériau formant la structure, ce filtre présentant une perméabilité inférieure à celle de la structure poreuse à densifier.

2. Procédé selon la revendication 1, dans lequel le filtre présente une perméabilité de 0,05 à 20 D et une épaisseur de 50 µm à 2 mm.

3. Procédé selon la revendication 1 ou 2, dans lequel le filtre est un tissu de polytétrafluoroéthylène.

4. Procédé selon la revendication 3, dans lequel le filtre a une perméabilité de 1 Darcy et une épaisseur de 0,2 mm.

5. Procédé selon l'une quelconque des revendications 1 à 4, dans lequel on intercale entre la structure poreuse à densifier et le filtre une autre structure poreuse d'une épaisseur au moins égale à 3 mm.

6. Procédé selon l'une quelconque des revendications 1 à 5, dans lequel le précurseur liquide est un hydrocarbure liquide choisi parmi les alcanes, les cycloalcanes, les alcènes, les hydrocarbures aromatiques et leurs dérivés.

7. Procédé selon la revendication 6, dans lequel le précurseur liquide est le cyclohexane.

8. Procédé selon la revendication 6, dans lequel le précurseur liquide est un hydrocarbure aromatique choisi parmi le benzène, le naphtalène et leurs dérivés halogénés ou alkylés.

9. Procédé selon l'une quelconque des revendications 1 à 5, dans lequel le précurseur liquide est un précurseur d'un composé céramique choisi parmi les borazines, les alcoolates, les silanes et leurs dérivés.

10. Procédé selon l'une quelconque des revendications 1 à 9, dans lequel le chauffage de l'ensemble est un chauffage par induction avec suscepteur et/ou un chauffage résistif par effet Joule et/ou un chauffage par induction avec couplage direct.

11. Procédé selon la revendication 10 dans lequel le chauffage est un chauffage inductif mis en oeuvre avec un suscepteur ou un chauffage résistif mis en oeuvre avec un résistor ; un joint de dilatation étant disposé entre ladite structure poreuse à densifier et ledit suscepteur ou ledit résistor.

12. Procédé selon l'une quelconque des revendications 1 à 5, dans lequel la structure poreuse est en carbone et le précurseur liquide est le cyclohexane.

## Claims

1. A film-boiling densification method for a porous structure, consisting in immersing the porous structure in a liquid precursor and heating the system in order to deposit the decomposition product of said liquid precursor in the pores of the porous structure, **characterized in that** the flow rate of the liquid precursor entering into the porous structure is reduced so as to reduce the phenomenon of vaporization of the liquid precursor around the porous structure to be densified, by depositing, around at least one part of the porous structure, a filter made of a material different from that forming the structure, said filter having a permeability lower than that of the porous structure to be densified.

2. The method according to Claim 1, wherein the filter has a permeability of 0.05 to 20 D and a thickness of 50 µm to 2 mm.

3. The method according to Claim 1 or 2, wherein the filter is a polytetrafluorethylene textile.

4. The method according to Claim 3, wherein the filter has a permeability of 1 Darcy and a thickness of 0.2 mm.

5. The method according to any one of Claims 1 to 4, wherein another porous structure of a thickness at least equal to 3 mm is intercalated between the porous structure to be densified and the filter.

6. The method according to any one of Claims 1 to 5, wherein the liquid precursor is a liquid hydrocarbon chosen from alkanes, cycloalkanes, alkenes, aromatic hydrocarbons and their derivatives.

7. The method according to Claim 6, wherein the liquid precursor is cyclohexane.

8. The method according to Claim 6, wherein the liquid precursor is an aromatic hydrocarbon chosen from benzene, naphthalene and their halogenated or alkylated derivatives.

9. The method according to any one of Claims 1 to 5, wherein the liquid precursor is a precursor of a ceramic compound chosen from borazines, alcoholates, silanes and their derivatives.

10. The method according to any one of Claims 1 to 9, wherein the heating of the system is a heating by induction using a susceptor and/or a resistive heating by Joule effect and/or a heating by induction by direct coupling.

11. The method according to Claim 10, wherein the heating is an inductive heating implemented using a susceptor or a resistive heating implemented using a resistor ; an expansion joint being disposed between said porous structure to be densified and said susceptor or said resistor.

12. The method according to any one of Claims 1 to 5, wherein the porous structure is made of carbon and the liquid precursor is cyclohexane.

## Patentansprüche

1. Verfahren zur Verdichtung einer porösen Struktur unter Erhitzung, darin bestehend, die poröse Struktur in einen flüssigen Vorläufer zu tauchen und das Ganze zu erwärmen, um das Zersetzungsprodukt des genannten flüssigen Vorläufers in den Poren der porösen Struktur abzuscheiden,
**dadurch gekennzeichnet, dass** man, um den Vorgang der Verdampfung des flüssigen Vorläufers um die zu verdichtende poröse Struktur herum zu reduzieren, die in die poröse Struktur eindringende Menge an flüssigem Vorläufer reduziert, indem man um wenigstens einen Teil der porösen Struktur herum einen Filter aus einem anderen Material als dem Material anbringt, das die poröse Struktur bildet, wobei dieser Filter eine Permeabilität aufweist, die niedriger ist als die der zu verdichtenden porösen Struktur.

2. Verfahren nach Anspruch 1, bei dem der Filter eine Permeabilität von 0,05 bis 20 D und eine Dicke von 50 µm bis 2 mm aufweist.

3. Verfahren nach Anspruch 1 oder 2, bei dem der Filter ein Gewebe aus Polytetrafluorethylen ist.

4. Verfahren nach Anspruch 3, bei dem der Filter eine Permeabilität von 1 Darcy und eine Dicke von 0,2 mm hat.

5. Verfahren nach einem der Ansprüche 1 bis 4, bei dem man zwischen der zu verdichtenden porösen Struktur und dem Filter eine andere poröse Struktur mit einer Dicke von wenigstens 3 mm einfügt.

6. Verfahren nach einem der Ansprüche 1 bis 5, bei dem der flüssige Vorläufer ein flüssiger Kohlenwasserstoff ist, ausgewählt unter den Alkanen, den Cycloalkanen, den Alkenen, den aromatischen Kohlenwasserstoffen und ihren Derivaten.

7. Verfahren nach Anspruch 6, bei dem der flüssige Vorläufer ein Cyclohexan ist.

8. Verfahren nach Anspruch 6, bei dem der flüssige Vorläufer ein aromatischer Kohlenwasserstoff ist, ausgewählt unter Benzol, Naphthalin und ihren halogenierten und alkylierten Derivaten.

9. Verfahren nach einem der Ansprüche 1 bis 5, bei dem der flüssige Vorläufer ein Vorläufer einer keramischen Verbindung ist, ausgewählt unter den Borazinen, den Alkoholaten, den Silanen und ihren Derivaten.

10. Verfahren nach einem der Ansprüche 1 bis 9, bei dem die Erwärmung des Ganzen eine induktive Erwärmung mit Suszeptor und/oder eine resistive Erwärmung durch ohmsche Heizung und/oder eine Erwärmung durch Induktion mit direkter bzw. galvanischer Kopplung ist.

11. Verfahren nach Anspruch 10, bei dem die Erwärmung eine induktive Erwärmung ist, realisiert mit einem Suszeptor, oder eine resistive Erwärmung, realisiert mit einem Resistor, wobei zwischen der genannten zu verdichtenden porösen Struktur und dem genannten Suszeptor oder dem genannten Resistor eine Dehnfuge vorgesehen ist.

12. Verfahren nach einem der Ansprüche 1 bis 5, bei dem die poröse Struktur aus Kohlenstoff ist und der flüssige Vorläufer Cyclohexan ist.
